# FASCICULE DE BREVET EUROPEEN

(11) **EP 2 125 933 B1**
(45) Date de publication et mention de la délivrance du brevet: **18.07.2018**
(21) Numéro de dépôt: 07872030.7
(22) Date de dépôt: 26.12.2007
(51) Int. Cl.: B29K 77/00, C08L 77/02, C08G 69/18

(54) **POUDRE DE POLYAMIDE COEUR-ECORCE**
KERN-SCHALE POLYAMIDPULVER
CORE-SHELL POLYAMIDE POWDER

(30) Priorité: 28.12.2006 FR 0656029
(43) Date de publication de la demande: 02.12.2009
(73) Titulaire: ARKEMA FRANCE, 92700 Colombes (FR)
(72) Inventeur: SENFF, Holger, F-78100 Saint Germain En Laye (FR)
(86) Numéro de dépôt international: PCT/FR2007/052621
(87) Numéro de publication internationale: WO 2008/087358

(56) Documents cités:
- EP-A- 1 571 173
- EP-A1- 0 192 515
- EP-A1- 1 413 595

## Description

La présente invention concerne un procédé de préparation d'une nouvelle poudre de polyamide 12, polyamide 6 ou de polyamide 6/12 ensemencée par une charge organique, cette poudre ayant une température de cristallisation plus basse qu'une même poudre ensemencée par une charge minérale. Il s'agit d'une synthèse de type anionique à partir de lactame. Les poudres obtenues ont un diamètre moyen compris entre 8 µm et 100 µm. Ces poudres de polyamide sont, en particulier, utiles dans la technologie d'agglomération de poudres de polyamide par fusion provoquée par un rayonnement tel que par exemple un faisceau laser (laser sintering), un rayonnement infra rouge ou un rayonnement UV (UV curing), dans le domaine des compositions cosmétiques ou encore dans les composites.

La technologie d'agglomération de poudres de polyamide sous faisceau laser sert à fabriquer des objets en trois dimensions tels que des prototypes et des modèles. On dépose une fine couche de poudre de polyamide sur une plaque horizontale maintenue dans une enceinte chauffée à une température située entre la température de cristallisation (Tc) et la température de fusion (Tf) de la poudre de polyamide. Le laser agglomère des particules de poudre en différents points de la couche de poudre selon une géométrie correspondant à l'objet, par exemple à l'aide d'un ordinateur ayant en mémoire la forme de l'objet et restituant cette dernière sous forme de tranches. Ensuite, on abaisse la plaque horizontale d'une valeur correspondant à l'épaisseur d'une couche de poudre (par exemple entre 0,05 et 2 mm et généralement de l'ordre de 0,1 mm) puis on dépose une nouvelle couche de poudre et le laser agglomère des particules de poudre selon une géométrie correspondant à cette nouvelle tranche de l'objet et ainsi de suite. La procédure est répétée jusqu'à ce que l'on ait fabriqué tout l'objet. On obtient, à l'issu du procédé, un bloc de poudre contenant à l'intérieur l'objet, les parties n'ayant pas été agglomérées étant restées à l'état de poudre. Ensuite, on refroidit doucement l'ensemble et l'objet se solidifie dès que sa température descend en dessous de la température de cristallisation (Tc). Après complet refroidissement, on sépare l'objet de la poudre qui peut être réutilisée pour une autre opération.

Il est recommandé que la poudre ait un écart Tf - Tc le plus grand possible afin d'éviter les phénomènes de déformation (ou "curling") lors de la fabrication. En effet, au temps t₀ c'est à dire immédiatement après l'action du faisceau laser, la température de l'échantillon est supérieure à la température de cristallisation (Tc) de la poudre mais l'apport d'une nouvelle couche de poudre plus froide fait chuter rapidement la température de la pièce en dessous de la (Tc) et entraîne des déformations.

Par ailleurs, une enthalpie de fusion (ΔHf) la plus élevée possible est requise afin d'obtenir une bonne définition géométrique des pièces fabriquées.

Il est clair que tout ce qui vient d'être expliqué pour l'agglomération de poudres de polyamide sous faisceau laser est valable quelque soit le rayonnement qui provoque la fusion.

Le brevet US 6245281 décrit l'utilisation de poudres de polyamide 12 (PA 12) dans la technologie d'agglomération de poudres sous faisceau laser. Ces poudres sont telles que leur Tf est comprise entre 185 et 189°C, leur Tc est comprise entre 138 et 143°C et leur ΔHf est de 112±17 J/g. Ces poudres sont fabriquées selon le procédé décrit dans le brevet DE 2906647 **(=** US 4334056**).** Dans ce dernier, on fabrique d'abord du PA 12 puis on le dissout dans l'éthanol entre 130 et 150°C, pour ensuite le refroidir doucement en dessous de 125°C sous agitation et le PA 12 précipite sous forme de poudre.

On a maintenant découvert une nouvelle poudre de polyamide ensemencée dont les particules de poudre sont constituées d'une écorce en PA6, PA12 ou PA6/12 et d'un coeur en PA6, ou PA12. L'utilisation de cette poudre dans une technologie d'agglomération définie ci-dessus est particulièrement avantageuse car cette dernière a une différence Tf-Tc en valeur absolue augmentée par rapport aux poudres usuelles. La particule de poudre peut avoir une écorce et un coeur de même nature PA mais de masses moléculaires M différentes : écorce et coeur en PA6, écorce et coeur en PA12, écorce et coeur en PA6/12 ou avoir une écorce et un coeur de nature PA différente. Dans ce cas, on a par exemple :
- une écorce en PA6 et un coeur PA12
- une écorce en PA12 et un coeur PA6,
- une écorce en PA6/12 et un coeur choisi parmi le PA6 et PA12.

La présente invention concerne une nouvelle poudre, son utilisation et son procédé de préparation par polymérisation anionique de monomère de lauryllactame, de caprolactame ou de leur mélange en solution dans un solvant dudit lactame ou dudit mélange et en présence de semences qui sont des particules de poudre de PA6 ou PA12, ladite polymérisation étant réalisée en présence :
- d'un catalyseur,
- d'un activateur ,
- d'une charge, ladite charge étant des particules de poudre de PA12 ou PA6 finement divisée, la rapport pondéral [charge organique/le ou les monomères introduits dans le milieu réactionnel] étant défini plus loin,
- d'un amide de formule R1-NH-CO-R2 dans laquelle R1 peut être remplacé par un radical R3-CO-NH- ou R3-O- et dans laquelle R1, R2 et R3 désignent un radical aryle, alkyle ou cycloalkyle, la proportion de ce composé étant comprise entre 0,001 mol et 0,1 mol pour 1000 g de monomères.
à une température de polymérisation > 70°C et <150°C.

La poudre ensemencée, obtenue à l'issu de la polymérisation, est insoluble dans le solvant du lactame introduit préalablement dans le milieu réactionnel. On parle d'ensemencement lorsque l'épaisseur de la couche de polymère de la particule de poudre ensemencée finale est supérieure au rayon de la charge et inversement, on parle d'enrobage lorsque l'épaisseur de la couche de polymère de la particule enrobée finale est inférieure au rayon de la charge.

L'invention a pour objet une particule de poudre de polyamide (PA) ensemencée constituée par une écorce en polyamide et un coeur en polyamide, le coeur et l'écorce étant soit de nature polyamide identique mais de masse moléculaire différente soit de nature polyamide différente.

Selon un mode de réalisation, la particule de poudre de polyamide (PA) ensemencée est caractérisée en ce que l'écorce est en PA6, PA12 ou PA6/12 et le coeur en PA6 ou PA12, le coeur et l'écorce étant soit de nature PA identique mais de masse moléculaire différente soit de nature PA différente.

Selon un mode de réalisation, la particule dont l'écorce a une température de fusion Tf1 et une température de cristallisation Tc1 et dont le coeur a une température de fusion Tf2 et une température de cristallisation Tc2, caractérisée en ce que la différence en valeur absolue entre Tf1-Tc1 et/ou entre Tf2-Tc2 est supérieure à la différence en valeur absolue entre la température de fusion et la température de cristallisation d'une particule de poudre ensemencée par une charge minérale et dont l'écorce est en PA6, PA12 ou PA6/12.

Selon un mode de réalisation, la particule de poudre est caractérisée en ce qu'elle a une écorce et un coeur de même nature PA, c'est à dire écorce et coeur en PA6, écorce et coeur en PA12 ou écorce et coeur en PA6/12.

Selon un mode de réalisation, la particule est caractérisée en ce qu'elle a une écorce en PA6 et un coeur PA12.

Selon un mode de réalisation, la particule est caractérisée en ce qu'elle a une écorce en PA12 et un coeur PA6.

Selon un mode de réalisation, la particule est caractérisée en ce qu'elle a une écorce en PA6/12 et un coeur choisi parmi le PA6 et PA12.

L'invention a également pour objet un procédé de fabrication de particule de poudre par polymérisation anionique en solution dans un solvant qui dissout le monomère mais pas les particules de polymère qui se forment pendant la polymérisation, caractérisé en ce que ladite polymérisation de lactame 6, de lactame 12 ou de leur mélange est effectuée en présence d'un catalyseur usuel de la polymérisation anionique des lactames, d'un activateur, d'au moins un amide choisi parmi les N, N'-alkylène bis amide et d'une charge organique.

Selon un mode de réalisation, le procédé est caractérisé en ce que la charge organique est choisie parmi PA6 et PA12.

Selon un mode de réalisation, le procédé est caractérisé en ce que le N, N'-alkylène bis amide est choisi parmi l'EBS et l'EBO.

Selon un mode de réalisation, le procédé est caractérisé en ce qu'on a, en plus du N, N'-alkylène bis amide, un autre amide choisi parmi l'oléamide, le N-stéaramide, l'isostéaramide et l'érucamide.

L'invention concerne aussi l'utilisation de la poudre dans des composites, des revêtements de substrat, des papiers transfert ou pour fabriquer des compositions cosmétiques.

Selon un mode de réalisation, l'utilisation de la poudre pour fabriquer des objets par agglomération de ladite poudre par fusion provoquée par un rayonnement choisi parmi un faisceau laser, un rayonnement infra rouge ou un rayonnement UV.

L'invention a également trait à un procédé de fabrication d'objet par agglomération de la poudre au cours duquel :
a. On dépose une fine couche de poudre (couche 1) sur une plaque horizontale maintenue dans une enceinte chauffée à une température située entre la température de cristallisation (Tc) et la température de fusion (Tf) de ladite poudre,
b. un laser agglomère des particules de poudre en différents points de la couche de poudre (couche 1) selon une géométrie correspondant à l'objet à fabriquer,
c. on abaisse la plaque horizontale d'une valeur correspondant à l'épaisseur d'une couche de poudre puis on dépose une nouvelle couche de poudre (couche 2),
d. le laser agglomère des particules de poudre de la couche de poudre (couche 2) selon une géométrie correspondant à cette nouvelle tranche de l'objet à fabriquer,
e. on abaisse la plaque horizontale d'une valeur correspondant à l'épaisseur d'une couche de poudre puis on dépose une nouvelle couche de poudre,
f. le laser agglomère des particules de poudre de la couche de poudre selon une géométrie correspondant à cette nouvelle tranche de l'objet à fabriquer,
g. on répète les étapes précédentes jusqu'à ce que l'objet soit terminé ;
h. on refroidit doucement en dessous de la température de cristallisation (Tc).
Après complet refroidissement, on sépare l'objet de la poudre qui peut être réutilisée pour une autre opération.

### LES INGREDIENTS DE LA POLYMERISATION

S'agissant de la polymérisation anionique qui est mise en oeuvre pour l'obtention des particules de PA, celle-ci est conduite dans un solvant.

### • Le Solvant

Le solvant utilisé dissout le monomère mais pas les particules de polymère qui se forment pendant la polymérisation. Des exemples de solvant sont donnés dans le brevet EP192515. Avantageusement, le solvant est une coupe d'hydrocarbures paraffiniques dont la plage d'ébullition est comprise entre 120 et 170°C, de préférence entre 140 et 170°C.

Le solvant peut être sursaturé en monomère à la température d'initiation, c'est-à-dire à la température à laquelle débute la polymérisation. Différents moyens permettent de sursaturer le solvant en monomère. Un de ces moyens peut consister à saturer le solvant en monomère à une température supérieure à celle d'initiation, puis à abaisser la température jusqu'à la température d'initiation. Un autre moyen peut consister à sensiblement saturer le solvant en monomère à la température d'initiation, puis à ajouter, toujours à la cette température, un amide primaire contenant de préférence de 12 à 22 atomes de carbone, comme par exemple l'oléamide, le N-stéaramide, l'érucamide, l'isostéaramide ou bien un N,N'-alkylène bis amide dont des exemples sont donnés plus loin.

Il est également possible de mettre en oeuvre la polymérisation dans un solvant non sursaturé en monomère. Dans ce cas, le milieu réactionnel contient le monomère dissous dans le solvant à une concentration éloignée de la sursaturation à la température d'initiation.

### • Le Catalyseur

Un catalyseur choisi parmi les catalyseurs usuels de la polymérisation anionique des lactames est utilisé. Il s'agit d'une base suffisamment forte pour conduire à un lactamate après réaction avec le lactame. Une combinaison de plusieurs catalyseurs est envisageable. A titre d'exemples non limitatifs, on peut citer l'hydrure de sodium, l'hydrure de potassium, le sodium, le méthylate et/ou l'éthylate de sodium. La quantité de catalyseur(s) introduite peut en général varier entre 0,5 et 3 moles pour 100 moles de monomère.

### • L'Activateur

On ajoute également un activateur dont le rôle est de provoquer et/ou accélérer la polymérisation. L'activateur est choisi parmi les lactames-N-carboxyanilides, les (mono)isocyanates, les polyisocyanates, les carbodiimides, les cyanamides, les acyllactames et acylcarbamates, les triazines, les urées, les imides N-substituées, les esters et le trichlorure de phosphore. Il peut éventuellement aussi s'agir d'un mélange de plusieurs activateurs. L'activateur peut aussi éventuellement être formé *in situ,* par exemple, par réaction d'un isocyanate d'alkyle avec le lactame pour donner un acyl-lactame.

Le rapport molaire catalyseur/activateur est compris entre 0,2 et 2, de préférence entre 0,8 et 1,2.

### • L'amide

On ajoute également au moins un amide dont un est toujours un N,N'-alkylène bis amide comme indiqué dans EP192515**.** La quantité de N,N'-alkylène bis amide(s) introduite est en général de l'ordre de 0,001 à 4 moles, de préférence de 0,075 à 2 moles pour 100 moles de monomère. Parmi les N,N'-alkylène bis amides particulièrement recommandées, on peut citer les N,N'-alkylène bis amides d'acides gras et mieux encore :
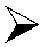 la N,N'-Ethylène bis-stéaramide de formule C₁₇H₃₅-C(=O)-NH-CH₂CH₂-NH-C(=O)-C₁₇H₃₅ abrégé EBS.
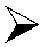 N,N'-Ethylène bis-oléamide de formule C₁₇H₃₃-C(=O)-NH-CH₂CH₂-NH-C(=O)-C₁₇H₃₃ abrégé EBO.
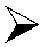 les N,N'-alkylène bispalmitamide, gadoléamide, cétoléamide, érucamide. De préférence, on utilise l'EBS et/ou l'EBO.
On peut également ajouter un amide primaire contenant de préférence de 12 à 22 atomes de carbone. Il peut être choisi parmi : l'oléamide, le N-stéaramide, l'isostéramide, l'érucamide.

### • La charge organique

S'agissant de la charge organique, il s'agit de poudres de PA12, PA6 ou PA6/12 (par exemple des poudres d'Orgasol® d'Arkema, des poudres Vestosint® de Degussa, de poudre MICROPAN® de Chemopharma...).

La quantité de charge organique et le diamètre desdites charges permettent d'orienter dans le sens souhaité (petites particules ou grosses particules) la taille des particules finales obtenues au terme de la polymérisation.

### • Les autres Charges ou Additifs

On peut également ajouter dans le milieu réactionnel tout type de charges (pigments, colorants, noir de carbone, nanotubes de carbone...) ou additifs (antioxydants, anti-UV, plastifiants,...) à condition que tous ces composés soient bien secs et inertes vis-à-vis du milieu réactionnel.

### LA POLYMERISATION

La polymérisation anionique est conduite en continu ou bien de préférence, en discontinu (batch). En discontinu, on introduit le solvant, puis simultanément ou successivement le ou les monomère(s), éventuellement une N,N'-alkylène bis amide, la charge, le catalyseur et l'activateur. Il est recommandé d'introduire d'abord le solvant et le ou les monomère(s) puis d'éliminer toute trace d'eau, par exemple à l'aide d'une distillation azéotropique, puis d'ajouter le catalyseur une fois le milieu anhydre. La charge peut être introduite par exemple après l'introduction du ou des monomère(s). Il peut être avantageux pour éviter la prise en masse ou la perte de contrôle de la polymérisation d'introduire l'activateur non pas en une seule fois mais par incréments ou bien à une vitesse d'introduction donnée.

On opère à la pression atmosphérique ou bien sous une pression légèrement supérieure (pression partielle du solvant chaud) et à une température comprise entre 20°C et la température d'ébullition du solvant. La température d'initiation et de polymérisation des lactames est en général comprise entre 70 et 150°C, de préférence entre 80 et 130°C et avantageusement <120°C et >90°C.

Le rapport pondéral [charge organique/ le ou les monomère(s), introduit(s) dans le milieu réactionnel] exprimé en % est compris entre 0,001 et 65%, de préférence entre 0,005 et 45%, encore plus préférentiellement entre 0,01 et 30%, et avantageusement entre 0,05 et 20%.

Les poudres selon l'invention peuvent être utilisées dans le cadre du procédé de fabrication d'objets par fusion provoquée par un faisceau laser (laser sintering), un rayonnement IR ou un rayonnement UV. La technique du laser sintering est décrite dans la demande de brevet EP1571173 de la demanderesse.

### LES EXEMPLES :

Nous allons maintenant donner des exemples de l'invention (voir **tableau 1 et 2** ci-dessous).

### • Mesure de la granulométrie des poudres obtenues

L'analyse des poudres obtenues dans les Exemples et Comparatifs ci-dessous est réalisée à l'aide d'un granulomètre de marque Coulter LS230. Il permet d'obtenir la distribution granulométrique des poudres de laquelle on peut déterminer :
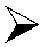 le diamètre moyen.
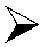 La largeur de la distribution ou l'écart-type de la distribution.

La distribution granulométrique des poudres selon l'invention est déterminée selon les techniques habituelles à l'aide d'un granulomètre Coulter LS230 de la société Beckman-Coulter. A partir de la distribution granulométrique, il est possible de déterminer le diamètre moyen en volume avec le mode de calcul logarithmique version 2.11a. du logiciel, ainsi que l'écart-type qui mesure le resserrement de la distribution ou la largeur de la distribution autour du diamètre moyen. C'est l'un des avantages du procédé décrit ici que de permettre d'obtenir une distribution resserrée (écart-type faible) par rapport au diamètre moyen. Cet écart type est calculé grâce au mode de calcul statistique logarithmique, version 2.11a. du logiciel.

### • Mesure des caractéristiques thermiques par DSC

L'analyse des poudres est faite selon la norme ISO 11357-3 "Plastics - Differential scanning calorimetrie (DSC) Part 3: Détermination of temperature and enthalpy of melting and crystallization."

Dans les exemples suivants, notamment pour ce qui concerne la DSC, la température de fusion indiquée par « Tf » correspond à la première chauffe ou température de fusion Tf1.

### • Mesure de la viscosité en solution

La viscosité en solution et mesurée à 0.5%massique dans m-cresol à 20°C. La viscosité en solution étant reliée à la masse moléculaire, la viscosité est donc un moyen d'exprimer la masse moléculaire.

### EXEMPLES (TABLEAU 1 ET 2CI-DESSOUS):

### Exemple Comparatif 1 (PA6/12 + silice):

On introduit dans le réacteur maintenu sous azote 2800 ml de solvant, puis successivement 108 g de caprolactame, 791 g de lauryllactame sec, 14,4 g d'EBS et 12,6 g d'AEROSIL® R972 (silice) finement divisée. Après avoir mis en route l'agitation à 300t/min, on chauffe progressivement jusqu'à 110°C, puis on distille sous vide 290ml de solvant afin d'entraîner par azéotropie toute trace d'eau qui pourrait être présente.

Après retour à la pression atmosphérique, on introduit alors rapidement sous azote le catalyseur anionique, 7,2 g d'hydrure de sodium à 60% de pureté dans de l'huile et on augmente l'agitation à 720 t/min sous azote à 110°C pendant 30 minutes.

Ensuite, on ramène la température à 96°C et grâce à une petite pompe doseuse, on réalise une injection continue dans le milieu réactionnel de l'activateur choisi, à savoir l'isocyanate de stéaryle (32,9 g rempli à 314 g avec du solvant) selon le programme suivant :
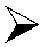 10 g/h de solution d'isocyanate pendant 300 minutes ;
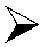 88 g/h de solution d'isocyanate pendant 180 minutes.
Parallèlement, la température est maintenue à 96°C pendant les 360 premières minutes, puis est montée à 110°C en 60 minutes et maintenue à 110°C pendant encore 2 heures après la fin d'introduction de l'isocyanate. La polymérisation est alors terminée, le réacteur est presque propre.

Après refroidissement à 80°C, décantation et séchage, la granulométrie est comprise entre 1 et 40 µm avec un diamètre moyen des particules de 9,9 µm, un écart type de 1,54 et une SSA de 16,8 m²/g sans agglomérats. Le premier point fusion est de 163°C et la viscosité en solution 0,84 dl/g.

### Exemple 2 (PA6/12 ensemencé PA12):

On introduit dans le réacteur maintenu sous azote 2800 ml de solvant, puis successivement 108 g de caprolactame, 679 g de lauryllactame sec, 14,4 g d'EBS et 112 g d'ORGASOL® 2001 UD NAT1 (poudre PA12 à 5 µm de diamètre) finement divisé. Après avoir mis en route l'agitation à 300 t/min, on chauffe progressivement jusqu'à 110°C, puis on distille sous vide 290 ml de solvant afin d'entraîner par azéotropie toute trace d'eau qui pourrait être présente.

Après retour à la pression atmosphérique, on introduit alors rapidement sous azote le catalyseur anionique, 7,2 g d'hydrure de sodium à 60% de pureté dans de l'huile et on augmente l'agitation à 720t/min sous azote à 110°C pendant 30 minutes.

Ensuite, on ramène la température à 96°C et grâce à une petite pompe doseuse, on réalise une injection continue dans le milieu réactionnel de l'activateur choisi, à savoir l'isocyanate de stéaryle (32,9 g rempli à 314 g avec du solvant) selon le programme suivant :
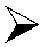 10g/h de solution d'isocyanate pendant 300 minutes ;
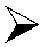 88g/h de solution d'isocyanate pendant 180 minutes.
Parallèlement, la température est maintenue à 96°C pendant les 360 premières minutes puis est montée à 110°C en 60 minutes et maintenue à 110°C pendant encore 2 heures après la fin d'introduction de l'isocyanate.

La polymérisation terminée, le réacteur est presque propre. Après refroidissement à 80°C, décantation et séchage, la granulométrie est comprise entre 3 et 35 µm avec un diamètre moyen des particules de 11,8 µm, un écart type de 1,27 et une SSA de 9,3 m²/g sans agglomérats. Les températures de fusion écorce et coeur sont respectivement de 161,5°C et 173,7°C.

### Exemple Comparatif 3 (PA6/12 + silice) :

On introduit dans le réacteur maintenu sous azote 2800 ml de solvant, puis successivement 108 g de caprolactame, 791 g de lauryllactame sec, 24,7 g d'EBS et 16,2 g d'AEROSIL® R972 (silice) finement divisée. Après avoir mis en route l'agitation à 300t/min, on chauffe progressivement jusqu'à 110°C, puis on distille sous vide 290 ml de solvant afin d'entraîner par azéotropie toute trace d'eau qui pourrait être présente.

Après retour à la pression atmosphérique, on introduit alors rapidement sous azote le catalyseur anionique, 7,2 g d'hydrure de sodium à 60% de pureté dans de l'huile et on augmente l'agitation à 720 t/min sous azote à 110°C pendant 30 minutes.

Ensuite, on ramène la température à 105°C et grâce à une petite pompe doseuse, on réalise une injection continue dans le milieu réactionnel de l'activateur choisi, à savoir l'isocyanate de stéaryle (32,9 g rempli à 324 g avec du solvant) selon le programme suivant :
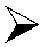 53,9 g/h de solution d'isocyanate pendant 360 minutes.
Parallèlement, la température est maintenue à 105°C pendant les 360 minutes d'injection puis est montée à 110°C en 60 minutes et maintenue à 110°C pendant encore 3 heures après la fin d'introduction de l'isocyanate.

La polymérisation terminée, le réacteur est presque propre. Après refroidissement à 80°C, décantation et séchage, la granulométrie est comprise entre 2 et 70 µm avec un diamètre moyen des particules de 23,8 µm, un écart type de 1,65 sans agglomérats.

### Exemple 4 (PA6/12 ensemencé PA12) :

On introduit dans le réacteur maintenu sous azote 2800 ml de solvant, puis successivement 108 g de caprolactame, 791 g de lauryllactame sec, 12,6 g d'EBS et 18,7 d'ORGASOL® 2001 UD NAT1 (poudre PA12 à 5µm de diamètre) finement divisé. Après avoir mis en route l'agitation à 300 t/min, on chauffe progressivement jusqu'à 110°C, puis on distille sous vide 290 ml de solvant afin d'entraîner par azéotropie toute trace d'eau qui pourrait être présente.

Après retour à la pression atmosphérique, on introduit alors rapidement sous azote le catalyseur anionique, 5,4 g d'hydrure de sodium à 60% de pureté dans de l'huile et on augmente l'agitation à 720 t/min sous azote à 110°C pendant 30 minutes.

Ensuite, on ramène la température à 96°C et grâce à une petite pompe doseuse, on réalise une injection continue dans le milieu réactionnel de l'activateur choisi, à savoir l'isocyanate de stéaryle (16,45 g rempli à 324 g avec du solvant) selon le programme suivant :
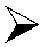 53,9 g/h de solution d'isocyanate pendant 360 minutes.
Parallèlement, la température est maintenue à 96°C pendant 360 minutes pendant l'injection, puis est montée à 110°C en 60 minutes et maintenue à 110°C pendant encore 3 heures après la fin d'introduction de l'isocyanate.

La polymérisation terminée, le réacteur est presque propre. Après refroidissement à 80°C, décantation et séchage, la granulométrie est comprise entre 1 et 40 µm avec un diamètre moyen des particules de 18,8µm, la viscosité en solution est de 0,91 dl/g, la Tf1=166,9°C et la Tc1=109,2°C.

### Exemple 5 (PA6 ensemencé PA12) :

On introduit dans le réacteur maintenu sous azote 2800 ml de solvant, puis successivement 899 g de caprolactame, 7,2 g d'EBS et 54 g de ORGASOL® 2001 EXD NAT1. Après avoir mis en route l'agitation à 300 t/min, on chauffe progressivement jusqu'à 110°C, puis on distille sous vide 290 ml de solvant afin d'entraîner par azéotropie toute trace d'eau qui pourrait être présente.

Après retour à la pression atmosphérique, on introduit alors rapidement sous azote le catalyseur anionique, 5,8 g d'hydrure de sodium à 60% de pureté dans de l'huile et on augmente l'agitation à 550 t/min, sous azote à 110°C pendant 30 minutes.

Ensuite, on ramène la température à 120°C et on reste à cette température pendant 60 minutes. Grâce à une petite pompe doseuse, on réalise une injection continue dans le milieu réactionnel de l'activateur choisi, à savoir l'isocyanate de stéaryle (37,3 g rempli à 66,3 g avec du solvant) selon le programme suivant :
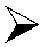 41 g/h de solution d'isocyanate pendant 95 minutes.

Parallèlement, la température est maintenue à 120°C pendant les 215 premières minutes.

La polymérisation terminée, le réacteur est presque propre. Après refroidissement à 80°C, décantation et séchage, la granulométrie est comprise entre 10 et 80 µm, le diamètre moyen des particules est de 31 µm.
Une analyse DSC montre des Tf=171°C, Tf=216°C, Tc=144°C et Tc=176°C.

### Exemple 6 (PA6 ensemencé PA6):

On introduit dans le réacteur maintenu sous azote 2800 ml de solvant, puis successivement 899g de caprolactame, 7,2 g d'EBS et 54 g de ORGASOL® 1002 D NAT1 (poudre PA6). Après avoir mis en route l'agitation à 300t/min, on chauffe progressivement jusqu'à 110°C, puis on distille sous vide 290ml de solvant afin d'entraîner par azéotropie toute trace d'eau qui pourrait être présente.

Après retour à la pression atmosphérique, on introduit alors rapidement sous azote le catalyseur anionique, 5,8 g d'hydrure de sodium à 60% de pureté dans de l'huile et on augmente l'agitation à 550 t/min, sous azote à 110°C pendant 30 minutes.

Ensuite, on ramène la température à 120°C et on reste à cette température pendant 60 minutes. Grâce à une petite pompe doseuse, on réalise une injection continue dans le milieu réactionnel de l'activateur choisi, à savoir l'isocyanate de stéaryle (37,3 g rempli à 66,3 g avec du solvant) selon le programme suivant :
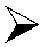 41 g/h de solution d'isocyanate pendant 95 minutes.

Parallèlement, la température est maintenue à 120°C pendant les 215 premières minutes.
La polymérisation terminée, le réacteur est presque propre. Après refroidissement à 80°C, décantation et séchage, la granulométrie est comprise entre 10 et 100 µm, le diamètre moyen des particules est de 45,8 µm. Une analyse DSC montre des Tf=214°C, et Tc=172°C

### Exemple Comparatif 7 (PA6 + silice):

On introduit dans le réacteur maintenu sous azote 2800 ml de solvant, puis successivement 899g de caprolactame, 7,2 g d'EBS et 5,75g d'AEROSIL® R972 (silice) finement divisée. Après avoir mis en route l'agitation à 300t/min, on chauffe progressivement jusqu'à 110°C, puis on distille sous vide 290ml de solvant afin d'entraîner par azéotropie toute trace d'eau qui pourrait être présente.

Après retour à la pression atmosphérique, on introduit alors rapidement sous azote le catalyseur anionique, 5,8 g d'hydrure de sodium à 60% de pureté dans de l'huile et on augmente l'agitation à 550 t/min, sous azote à 110°C pendant 30 minutes.

Ensuite, on ramène la température à 120°C et on reste à cette température pendant 60 minutes. Grâce à une petite pompe doseuse, on réalise une injection continue dans le milieu réactionnel de l'activateur choisi, à savoir l'isocyanate de stéaryle (37,3 g rempli à 66,3 g avec du solvant) selon le programme suivant :
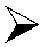 41 g/h de solution d'isocyanate pendant 95 minutes.

Parallèlement, la température est maintenue à 120°C pendant les 215 premières minutes.
La polymérisation terminée, le réacteur est presque propre. Après refroidissement à 80°C, décantation et séchage, la granulométrie est comprise entre 2 et 75 µm, le diamètre moyen des particules est de 23 µm. Une analyse DSC montre des Tf=216°C, et Tc=179°C.

### Exemple Comparatif 8 (PA12 + silice):

On introduit dans le réacteur maintenu sous azote 2757 ml de solvant, puis successivement 899g de lactame 12, 7,2 g d'EBS et 7,5g de silice Sipernat® 320DS.

Après avoir mis en route l'agitation à 300t/min, on chauffe progressivement jusqu'à 105°C, puis on distille sous vide 360ml de solvant afin d'entraîner par azéotropie toute trace d'eau qui pourrait être présente.

Après retour à la pression atmosphérique, on introduit alors rapidement sous azote le catalyseur anionique, 2,7 g d'hydrure de sodium à 60% de pureté dans de l'huile et on augmente l'agitation à 550 t/min, sous azote à 105°C pendant 30 minutes.

Grâce à une petite pompe doseuse, on réalise une injection continue dans le milieu réactionnel de l'activateur choisi, à savoir l'isocyanate de stéaryle (19,2 g rempli à 220,5 g avec du solvant) selon le programme suivant :
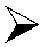 8 g/h de solution d'isocyanate pendant 180 minutes
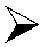 26 g/h de solution d'isocyanate pendant 120 minutes
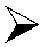 71g/h de solution d'isocyanate pendant 120 minutes

Parallèlement, la température est maintenue à 105°C pendant 360 minutes pendant l'injection, puis est montée à 110°C en 30 minutes et maintenue à 110°C pendant 30 min, puis est montée à 130min en 30min et maintenue à 130 min pendant encore 3 heures après la fin d'introduction de l'isocyanate.
La polymérisation terminée, le réacteur est presque propre. Après refroidissement à 80°C, décantation et séchage, la granulométrie est comprise entre 15 et 80 µm, le diamètre moyen des particules est de 36 µm. Une analyse DSC montre des Tf=183°C, et Tc=138,2°C.

### Exemple 9 (PA12 ensemencé PA12):

On introduit dans le réacteur maintenu sous azote 2757 ml de solvant, puis successivement 899g de lactame 12, 7,2 g d'EBS et 11,3g d'Orgasol® 2001 EXD NAT1 (poudre PA12). Après avoir mis en route l'agitation à 300t/min, on chauffe progressivement jusqu'à 105°C, puis on distille sous vide 360ml de solvant afin d'entraîner par azéotropie toute trace d'eau qui pourrait être présente.

Après retour à la pression atmosphérique, on introduit alors rapidement sous azote le catalyseur anionique, 2,7 g d'hydrure de sodium à 60% de pureté dans de l'huile et on augmente l'agitation à 550 t/min, sous azote à 105°C pendant 30 minutes.

Grâce à une petite pompe doseuse, on réalise une injection continue dans le milieu réactionnel de l'activateur choisi, à savoir l'isocyanate de stéaryle (19,2 g rempli à 220,5 g avec du solvant) selon le programme suivant :
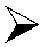 8 g/h de solution d'isocyanate pendant 180 minutes
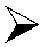 26 g/h de solution d'isocyanate pendant 120 minutes
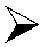 71g/h de solution d'isocyanate pendant 120 minutes

Parallèlement, la température est maintenue à 105°C pendant 360 minutes pendant l'injection, puis est montée à 110°C en 30 minutes et maintenue à 110°C pendant 30 min, puis est montée à 130min en 30min et maintenue à 130 min pendant encore 3 heures après la fin d'introduction de l'isocyanate.
La polymérisation terminée, le réacteur est presque propre. Après refroidissement à 80°C, décantation et séchage, la granulométrie est comprise entre 20 et 90 µm, le diamètre moyen des particules est de 50 µm. Une analyse DSC montre des Tf=183,8°C, et Tc=134,7°C.

### Exemple 10 (PA12 ensemencé PA12):

On introduit dans le réacteur maintenu sous azote 2757 ml de solvant, puis successivement 899g de lactame 12, 7,2 g d'EBS et 1,65g d'Orgasol® 2002 UD NAT1 (poudre PA12). Après avoir mis en route l'agitation à 300t/min, on chauffe progressivement jusqu'à 105°C, puis on distille sous vide 360ml de solvant afin d'entraîner par azéotropie toute trace d'eau qui pourrait être présente.

Après retour à la pression atmosphérique, on introduit alors rapidement sous azote le catalyseur anionique, 2,7 g d'hydrure de sodium à 60% de pureté dans de l'huile et on augmente l'agitation à 550 t/min, sous azote à 105°C pendant 30 minutes.

Grâce à une petite pompe doseuse, on réalise une injection continue dans le milieu réactionnel de l'activateur choisi, à savoir l'isocyanate de stéaryle (19,2 g rempli à 220,5 g avec du solvant) selon le programme suivant :
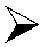 8 g/h de solution d'isocyanate pendant 180 minutes
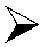 26 g/h de solution d'isocyanate pendant 120 minutes
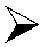 71g/h de solution d'isocyanate pendant 120 minutes

Parallèlement, la température est maintenue à 105°C pendant 360 minutes pendant l'injection, puis est montée à 110°C en 30 minutes et maintenue à 110°C pendant 30 min, puis est montée à 130min en 30min et maintenue à 130 min pendant encore 3 heures après la fin d'introduction de l'isocyanate.
La polymérisation terminée, le réacteur est presque propre. Après refroidissement à 80°C, décantation et séchage, la granulométrie est comprise entre 20 et 90 µm, le diamètre moyen des particules est de 46 µm. Une analyse DSC montre des Tf=183°C, et Tc=135,8°C.

### Exemple Comparatif 11 (PA6/12 + silice):

On introduit dans le réacteur maintenu sous azote 2800 ml de solvant, puis successivement 323g de caprolactame, 575g lactame 12, 30,9 g d'EBS et 10.8g d'AEROSIL® R972 (silice) finement divisée. Après avoir mis en route l'agitation à 300t/min, on chauffe progressivement jusqu'à 110°C, puis on distille sous vide 290ml de solvant afin d'entraîner par azéotropie toute trace d'eau qui pourrait être présente.

Après retour à la pression atmosphérique, on introduit alors rapidement sous azote le catalyseur anionique, 9 g d'hydrure de sodium à 60% de pureté dans de l'huile et on augmente l'agitation à 550 t/min, sous azote à 110°C pendant 30 minutes.

Ensuite, on ramène la température à 81°C et on reste à cette température pendant 30 minutes. Grâce à une petite pompe doseuse, on réalise une injection continue dans le milieu réactionnel de l'activateur choisi, à savoir l'isocyanate de stéaryle (32,4 g rempli à 323,9 g avec du solvant) selon le programme suivant :
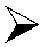 53,9 g/h de solution d'isocyanate pendant 360 minutes.

Parallèlement, la température est maintenue à 81°C pendant l'injection, puis est montée à 110°C en 60 minutes et maintenue à 110°C pendant encore 3 heures après la fin d'introduction de l'isocyanate.
La polymérisation terminée, le réacteur est presque propre. Après refroidissement à 80°C, décantation et séchage, la granulométrie est comprise entre 2 et 30 µm, le diamètre moyen des particules est de 9,2 µm. Une analyse DSC montre des Tf=142,4°C, et Tc=108,7°C.

### Exemple Comparatif 12 (PA6/12 ensemencé PA6):

On introduit dans le réacteur maintenu sous azote 2800 ml de solvant, puis successivement 323g de caprolactame, 575g lactame 12, 30,9 g d'EBS et 54g d'ORGASOL® 1002D NAT. Après avoir mis en route l'agitation à 300t/min, on chauffe progressivement jusqu'à 110°C, puis on distille sous vide 290ml de solvant afin d'entraîner par azéotropie toute trace d'eau qui pourrait être présente.

Après retour à la pression atmosphérique, on introduit alors rapidement sous azote le catalyseur anionique, 9 g d'hydrure de sodium à 60% de pureté dans de l'huile et on augmente l'agitation à 550 t/min, sous azote à 110°C pendant 30 minutes.

Ensuite, on ramène la température à 81°C et on reste à cette température pendant 30 minutes. Grâce à une petite pompe doseuse, on réalise une injection continue dans le milieu réactionnel de l'activateur choisi, à savoir l'isocyanate de stéaryle (32,4 g rempli à 323,9 g avec du solvant) selon le programme suivant :
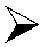 53,9 g/h de solution d'isocyanate pendant 360 minutes.

Parallèlement, la température est maintenue à 81°C pendant l'injection, puis est montée à 110°C en 60 minutes et maintenue à 110°C pendant encore 3 heures après la fin d'introduction de l'isocyanate.
La polymérisation terminée, le réacteur est presque propre. Après refroidissement à 80°C, décantation et séchage, la granulométrie est comprise entre 5 et 80 µm, le diamètre moyen des particules est de 31 µm. Une analyse DSC montre des Tf=141,8°C, Tf=210,7°C et Tc=92,9°C.

**TABLEAU 1**

| | **Comp1** | **Ex2** | **Comp3** | **Ex4** | **Ex5** | **Ex6** | **Comp7** |
|---|---|---|---|---|---|---|---|
| **Lactame6 (g)** | 108 | 108 | 108 | 108 | 899 | 899 | 899 |
| **Lactame12 (g)** | 791 | 679 | 791 | 791 | / | | |
| **EBS (g)** | 14,4 | 14,4 | 12,6 | 12,6 | 7,2 | 7,2 | 7.2 |
| **Charge minéral (g)** | 12,6 | | 16.2 | | | | 5.75 |
| **Charge organique (g)** | | 112 (PA12) | | 18,7 (PA12) | 54 (PA12) | 54 (PA6) | |
| **Isocyanate de stearyle (g)** | 32,9 | 32,9 | 32.9 | 16,54 | 37,3 | 37.3 | 37.3 |
| **Hna (g)** | 7,2 | 7,2 | 7.2 | 5,4 | 5,8 | 5.8 | 5.8 |
| **Diamètre moyen (µm)** | 9,9 | 11,8 | 23.8 | 18,8 | 31 | 45.8 | 23.0 |
| **Température de fusion (°C)** | 163 | 161,5* 173** | 162 | 166,9* | 216* 171** | 214 | 216 |
| **Température de cristalisation (°C)** | | 118,8 | 121,1 | 109,2* | 176* 144** | 172 | 179 |
| **\|Tf-Tc\|** | | 43,3* | 40,9 | 57,6 | 40* 27** | 42 | 37 |

| | | | | | | | |
|---|---|---|---|---|---|---|---|
| * au niveau de l'écorce de la particule de PA ** au niveau du coeur de la particule de PA | | | | | | | |

**TABLEAU 2**

| | **CompEX8** | **EX9** | **EX10** | **dompEX11** | **EX12** |
|---|---|---|---|---|---|
| **Lactame6 (g)** | / | / | / | 323 | 323 |
| **Lactame12 (g)** | 899 | 899 | 899 | 575 | 575 |
| **EBS (g)** | 7,2 | 7,2 | 7,2 | 30,9 | 30,9 |
| **Charge minéral (g)** | 7,5 | / | / | 10.8 | / |
| **Charge organique (g)** | / | 11,3 (PA12) | 1,65 (PA12) | / | 54 (PA6) |
| **Isocyanate de stearyle** | 19,2 | 19,2 | 19,2 | 32,4 | 32,4 |
| **HNa** | 2,7 | 2,7 | 2,7 | 9 | 9 |
| **Diamètre moyen (µm)** | 36 | 50 | 46 | 9,2 | 31 |
| **Température** de fusion Tf1 **(°C)** | 183 | 183,8 | 183 | 142,4 | 141,8* 210,7** |
| **Température de cristalisation (°C)** | 138,2 | 134,7 | 135,7 | 108,7 | 92,9* |
| **\|Tf-Tc\|** | 44,8 | 49,1 | 47,2 | 33,7 | 48,9 |
| **Viscosité en solution charge organique** | | 0.72 | 0.79 | | 0.72 |
| **Viscosité en solution poudre final** | 1.35 | 1.32 | 1.33 | 0.65 | 0.64 |

| | | | | | |
|---|---|---|---|---|---|
| * au niveau de l'écorce de la particule de PA ** au niveau du coeur de la particule de PA | | | | | |

## Revendications

1. Particule de poudre de polyamide (PA) ensemencée constituée par une écorce en polyamide et un coeur en polyamide, le coeur et l'écorce étant soit de nature polyamide identique mais de masse moléculaire différente soit de nature polyamide différente, **caractérisée en ce que** l'écorce est en PA6, PA12 ou PA6/12 et le coeur en PA6 ou PA12.

2. Particule selon la revendication 1 dont l'écorce a une température de fusion Tf1 et une température de cristallisation Tc1 et dont le coeur a une température de fusion Tf2 et une température de cristallisation Tc2, **caractérisée en ce que** la différence en valeur absolue entre Tf1-Tc1 et/ou entre Tf2-Tc2 est supérieure à la différence en valeur absolue entre la température de fusion et la température de cristallisation d'une particule de poudre ensemencée par une charge minérale et dont l'écorce est en PA6, PA12 ou PA6/12.

3. Particule de poudre selon l'une des revendications précédentes, **caractérisée en ce qu'**elle a une écorce et un coeur de même nature PA, c'est à dire écorce et coeur en PA6, écorce et coeur en PA12 ou écorce et coeur en PA6/12.

4. Particule selon l'une des revendications 1 ou 2, **caractérisée en ce qu'**elle a une écorce en PA6 et un coeur PA12.

5. Particule selon l'une des revendications 1 ou 2, **caractérisée en ce qu'**elle a une écorce en PA12 et un coeur PA6.

6. Particule selon l'une des revendications 1 ou 2, **caractérisée en ce qu'**elle a une écorce en PA6/12 et un coeur choisi parmi le PA6 et PA12.

7. Procédé de fabrication de particule de poudre selon l'une des revendications 1 à 6 par polymérisation anionique en solution dans un solvant qui dissout le monomère mais pas les particules de polymère qui se forment pendant la polymérisation, **caractérisé en ce que** ladite polymérisation de lactame 6, de lactame 12 ou de leur mélange est effectuée en présence d'un catalyseur usuel de la polymérisation anionique des lactames , d'un activateur, d'au moins un amide choisi parmi les N, N'-alkylène bis amide et d'une charge organique choisie parmi PA6 et PA12.

8. Procédé selon la revendication 7 **caractérisé en ce que** le N, N'-alkylène bis amide est choisi parmi l'EBS et l'EBO.

9. Procédé selon la revendication 8, **caractérisé en ce qu'**on a, en plus du N, N'-alkylène bis amide, un autre amide choisi parmi l'oléamide, le N-stéaramide, l'isostéaramide et l'érucamide.

10. Utilisation de la poudre selon l'une des revendications 1 à 6 dans des composites, des revêtements de substrat, des papiers transfert ou pour fabriquer des compositions cosmétiques.

11. Utilisation de la poudre selon l'une des revendications 1 à 6 pour fabriquer des objets par agglomération de ladite poudre par fusion provoquée par un rayonnement choisi parmi un faisceau laser, un rayonnement infra rouge ou un rayonnement UV.

12. Procédé de fabrication d'objet par agglomération de la poudre selon l'une des revendications 1 à 6 au cours duquel :
a. On dépose une fine couche de poudre (couche 1) sur une plaque horizontale maintenue dans une enceinte chauffée à une température située entre la température de cristallisation (Tc) et la température de fusion (Tf) de ladite poudre,
b. un laser agglomère des particules de poudre en différents points de la couche de poudre (couche 1) selon une géométrie correspondant à l'objet à fabriquer,
c. on abaisse la plaque horizontale d'une valeur correspondant à l'épaisseur d'une couche de poudre puis on dépose une nouvelle couche de poudre (couche 2),
d. le laser agglomère des particules de poudre de la couche de poudre (couche 2) selon une géométrie correspondant à cette nouvelle tranche de l'objet à fabriquer,
e. on abaisse la plaque horizontale d'une valeur correspondant à l'épaisseur d'une couche de poudre puis on dépose une nouvelle couche de poudre,
f. le laser agglomère des particules de poudre de la couche de poudre selon une géométrie correspondant à cette nouvelle tranche de l'objet à fabriquer,
g. on répète les étapes précédentes jusqu'à ce que l'objet soit terminé ;
h. on refroidit doucement en dessous de la température de cristallisation (Tc),
i. après complet refroidissement, on sépare l'objet de la poudre qui peut être réutilisée pour une autre opération.

## Patentansprüche

1. Angeimpfter Partikel eines Polyamid(PA)-Pulvers, bestehend aus einer Schale aus Polyamid und einem Kern aus Polyamid, wobei der Kern und die Schale entweder aus einem identischen Polyamid sind, das aber eine unterschiedliche molekulare Masse aufweist, oder aus unterschiedlichen Polyamiden sind, **dadurch gekennzeichnet, dass** die Schale aus PA6, PA12 oder PA6/12 und der Kern aus PA6 oder PA12 ist.

2. Partikel nach Anspruch 1, wobei die Schale eine Schmelztemperatur Tf1 und eine Kristallisationstemperatur Tc1 aufweist, und wobei der Kern eine Schmelztemperatur Tf2 und eine Kristallisationstemperatur Tc2 aufweist, **dadurch gekennzeichnet, dass** die Differenz im Absolutwert zwischen Tf1-Tc1 und/oder zwischen Tf2-Tc2 größer ist als die Differenz im Absolutwert zwischen der Schmelztemperatur und der Kristallisationstemperatur eines Pulverpartikels, der mit einem mineralischen Füllstoff angeimpft ist und dessen Schale aus PA6, PA12 oder PA6/12 ist.

3. Pulverpartikel nach einem der vorhergehenden Ansprüche, **dadurch gekennzeichnet, dass** er eine Schale und einen Kern aus dem gleichen PA aufweist, das heißt, Schale und Kern aus PA6, Schale und Kern aus PA12 oder Schale und Kern aus PA6/12.

4. Partikel nach einem der Ansprüche 1 oder 2, **dadurch gekennzeichnet, dass** er eine Schale aus PA6 und einen Kern aus PA12 aufweist.

5. Partikel nach einem der Ansprüche 1 oder 2, **dadurch gekennzeichnet, dass** er eine Schale aus PA12 und einen Kern aus PA6 aufweist.

6. Partikel nach einem der Ansprüche 1 oder 2, **dadurch gekennzeichnet, dass** er eine Schale aus PA6/12 und einen Kern, ausgewählt aus PA6 und PA12 aufweist.

7. Verfahren zur Herstellung eines Pulverpartikels nach einem der Ansprüche 1 bis 6 durch anionische Lösungspolymerisation in einem Lösemittel, das das Monomer auflöst aber nicht die Polymerpartikel, die sich während der Polymerisation bilden, **dadurch gekennzeichnet, dass** die Polymerisation von Lactam 6, von Lactam 12 oder deren Mischung in Gegenwart eines herkömmlichen Katalysators zur anionischen Polymerisation von Lactamen, eines Aktivators, mindestens eines Amids, ausgewählt aus den N,N'-Alkylenbisamiden, und einem organischen Füllstoff, ausgewählt aus PA6 und PA12, durchgeführt wird.

8. Verfahren nach Anspruch 7, **dadurch gekennzeichnet, dass** das N,N'-Alkylenbisamid ausgewählt ist aus EBS und EBO.

9. Verfahren nach Anspruch 8, **dadurch gekennzeichnet, dass** zusätzlich zu N,N'-Alkylenbisamid ein anderes Amid, ausgewählt aus Oleamid, N-Stearamid, Isostearamid und Erucamid, vorhanden ist.

10. Verwendung des Pulvers nach einem der Ansprüche 1 bis 6 in Verbundstoffen, Substratbeschichtungen, Transferpapieren oder zur Herstellung kosmetischer Zusammensetzungen.

11. Verwendung des Pulvers nach einem der Ansprüche 1 bis 6 zur Herstellung von Gegenständen durch Sintern des Pulvers durch Schmelzen, das durch eine Strahlung induziert wird, ausgewählt aus einer Laserstrahlung, Infrarotstrahlung oder UV-Strahlung.

12. Verfahren zur Herstellung eines Gegenstandes durch Sintern des Pulvers nach einem der Ansprüche 1 bis 6, wobei:
a. eine dünne Pulverschicht (Schicht 1) auf einer horizontalen Platte abgeschieden wird, die in einer Kammer gehalten wird, die auf eine Temperatur zwischen der Kristallisationstemperatur (Tc) und der Schmelztemperatur (Tf) des Pulvers erwärmt ist,
b. ein Laser Pulverpartikel an verschiedenen Punkten der Pulverschicht (Schicht 1) gemäß einer Geometrie sintert, die dem herzustellenden Gegenstand entspricht,
c. die horizontale Platte um einen Wert abgesenkt wird, der der Dicke einer Pulverschicht entspricht, dann eine neue Pulverschicht (Schicht 2) abgeschieden wird,
d. der Laser Pulverpartikel der Pulverschicht (Schicht 2) gemäß einer Geometrie sintert, die dieser neuen Schicht des herzustellenden Gegenstands entspricht,
e. die horizontale Platte um einen Wert abgesenkt wird, der der Dicke einer Pulverschicht entspricht, dann eine neue Pulverschicht abgeschieden wird,
f. der Laser Pulverpartikel der Pulverschicht gemäß einer Geometrie sintert, die dieser neuen Schicht des herzustellenden Gegenstands entspricht,
g. die vorherigen Schritte wiederholt werden, bis der Gegenstand fertig ist;
h. die Temperatur langsam unter die Kristallisationstemperatur (Tc) abgekühlt wird,
i. der Gegenstand nach dem vollständigen Abkühlen von dem Pulver getrennt wird, das für einen weiteren Vorgang wiederverwendet werden kann.

## Claims

1. Seeded polyamide (PA) powder particle composed of a shell of polyamide and a core of polyamide, the core and the shell being either of identical polyamide type but of different molecular mass, or of different polyamide type, **characterized in that** the shell is of PA6, PA12 or PA6/12 and the core is of PA6 or PA12.

2. Particle according to Claim 1 whose shell has a melting temperature Tf1 and a crystallization temperature Tc1 and whose core has a melting temperature Tf2 and a crystallization temperature Tc2, **characterized in that** the difference in absolute value between Tf1-Tc1 and/or between Tf2-Tc2 is greater than the difference in absolute value between the melting temperature and the crystallization temperature of a powder particle seeded by an inorganic filler and having a shell of PA6, PA12 or PA6/12.

3. Powder particle according to any of the preceding claims, **characterized in that** it has a shell and a core of the same PA type, in other words shell and core of PA6, shell and core of PA12 or shell and core of PA6/12.

4. Particle according to either of Claims 1 and 2, **characterized in that** it has a shell of PA6 and a core PA12.

5. Particle according to either of Claims 1 and 2, **characterized in that** it has a shell of PA12 and a core PA6.

6. Particle according to either of Claims 1 and 2, **characterized in that** it has a shell of PA6/12 and a core PA6 and PA12.

7. Process for preparing a powder particle according to any of Claims 1 to 6 by anionic polymerization in solution in a solvent which dissolves the monomer but not the polymer particles which form during the polymerization, **characterized in that** said polymerization of lactam 6, of lactam 12 or of a mixture thereof is carried out in the presence of a customary catalyst of the anionic polymerization of lactams, an activator, at least one amide selected from N,N'-alkylenebisamides, and an organic filler selected from PA6 and PA12.

8. Process according to Claim 7, **characterized in that** the N,N'-alkylenebisamide is selected from EBS and EBO.

9. Process according to Claim 8, **characterized in that** in addition to the N,N'-alkylenebisamide there is a further amide selected from oleamide, N-stear-amide, isostearamide, and erucamide.

10. Use of the powder according to any of Claims 1 to 6 in composites, substrate coatings, transfer papers or to manufacture cosmetic compositions.

11. Use of the powder according to any of Claims 1 to 6 to manufacture articles by sintering of said powder by melting induced by radiation selected from a laser beam, infrared radiation or UV radiation.

12. Method of producing an article by sintering of the powder according to any of Claims 1 to 6, wherein:
a. a thin layer of powder (layer 1) is placed on a horizontal plate held in a chamber heated at a temperature between the crystallization temperature (Tc) and the melting temperature (Tf) of said powder,
b. a laser sinters the powder particles at different points of the powder layer (layer 1) according to a geometry corresponding to the article to be produced,
c. the horizontal plate is lowered by a value corresponding to the thickness of one layer of powder and then a new layer of powder (layer 2) is deposited,
d. the laser sinters the powder particles of the powder layer (layer 2) according to a geometry corresponding to this new slice of the article to be produced,
e. the horizontal plate is lowered by a value corresponding to the thickness of one layer of powder and then a new layer of powder is deposited,
f. the laser sinters the powder particles of the powder layer according to a geometry corresponding to this new slice of the article to be produced,
g. the above steps are repeated until the article is finished;
h. the temperature is lowered gradually to below the crystallization temperature (Tc),
i. after complete cooling, the article is separated from the powder, which can be used again for a further operation.
